(19) Europäisches Patentamt
European Patent Office
Office européen des brevets

(11) **EP 3 521 353 A1**

(12) **EUROPEAN PATENT APPLICATION**
published in accordance with Art. 153(4) EPC

(43) Date of publication:
**07.08.2019 Bulletin 2019/32**

(21) Application number: **17855222.0**

(22) Date of filing: **27.03.2017**

(51) Int Cl.:
**C08J 9/18** (2006.01)          **B32B 5/28** (2006.01)
**B32B 27/30** (2006.01)

(86) International application number:
**PCT/JP2017/012366**

(87) International publication number:
**WO 2018/061263 (05.04.2018 Gazette 2018/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.09.2016 JP 2016188392**

(71) Applicant: **Sekisui Plastics Co., Ltd.**
**Osaka-shi, Osaka 530-0047 (JP)**

(72) Inventor: **KUWABARA, Yusuke**
**Tenri-shi**
**Nara 632-0007 (JP)**

(74) Representative: **Hoffmann Eitle**
**Patent- und Rechtsanwälte PartmbB**
**Arabellastraße 30**
**81925 München (DE)**

(54) **EXPANDED BEADS, MOLDED FOAM, FIBER-REINFORCED COMPOSITE, AND AUTOMOTIVE COMPONENT**

(57) Expanded particles including a base resin including a copolymer of an aromatic vinyl compound, a (meth)acrylic acid ester, and an unsaturated dicarboxylic acid, in which the expanded particles have an average cell diameter of 5 to 50 μm and a standard deviation of the average cell diameter of less than 0.8.

Fig. 1

( a )

( b )

( c )

## Description

TECHNICAL FIELD

The present invention relates to expanded beads (expanded particles), a molded foam (an expanded molded article), a fiber-reinforced composite, and an automotive (an automobile) component. More particularly, the present invention relates to expanded particles which can afford an expanded molded article with improved mechanical physical properties, and an expanded molded article, a fiber-reinforced composite, and an automobile component that are obtained from the expanded particles.

BACKGROUND TECHNOLOGY

In recent years, in vehicles such as aircraft, automobiles, and ships, improvement in fuel consumption has been required for reducing a load on the global environment, and the trend of converting metal materials constituting these vehicles into resin materials, to greatly save the weight has been becoming strong. Examples of these resin materials include fiber-reinforced plastic materials, and further weight saving and higher rigidity have been also studied by partial use of a light core material. As a material that is used as the light core material, a polystyrene expanded article having high compression strength has been studied.

For example, Japanese Unexamined Patent Application, First Publication No. 2012-214751 (Patent Document 1) describes expandable particles comprising a blowing agent containing a hydrocarbon having 6 or less carbon atoms in polystyrene-based resin particles, in which an organic compound having 7 or more carbon atoms is uniformly contained in the entire expandable particles (except for internal cells), and a solubility parameter (A) of the organic compound and a solubility parameter (B) of the blowing agent satisfy a particular relationship, and an expanded molded article obtained from the expandable particles.

PRIOR ART DOCUMENTS

Patent Documents

Patent Document 1: Japanese Unexamined Patent Application, First Publication No. 2012-214751

SUMMARY OF THE INVENTION

PROBLEM TO BE SOLVED BY THE INVENTION

However, since the expanded molded article of Patent Document 1 is obtained from expandable particles made of a polystyrene-based resin having a low glass transition temperature, mechanical physical properties such as heat resistance have not been sufficient. For that reason, provision of an expanded molded article with improved mechanical physical properties and expanded particles from which the expanded molded article can be produced has been desired.

MEANS FOR SOLVING THE PROBLEM

The inventor of the present invention has repeated a test under an idea that if another kind of a resin is used in place of the polystyrene-based resin, mechanical physical properties would be improved, and found that when a copolymer of an aromatic vinyl compound, a (meth)acrylic acid ester, and an unsaturated dicarboxylic acid is used as a base resin of expanded particles, the mechanical physical properties of the expanded molded article can be improved to some extent. Then, the inventor has made a further study, and unexpectedly found that by uniformizing cells constituting the expanded particles to a specified size while the base resin is used, the mechanical physical properties can be considerably improved, which has led to the present invention.

Thus, the present invention provides expanded particles comprising a base resin including a copolymer of an aromatic vinyl compound, a (meth)acrylic acid ester, and an unsaturated dicarboxylic acid, wherein the expanded particles have an average cell diameter of 5 to 50 $\mu$m and a standard deviation of the average cell diameter of less than 0.8.

Additionally, the present invention provides an expanded molded article comprising a base resin including a copolymer of an aromatic vinyl compound, a (meth)acrylic acid ester, and an unsaturated dicarboxylic acid, wherein the expanded molded article has an average cell diameter of 5 to 60 $\mu$m and a standard deviation of the average cell diameter of less than 0.8.

Furthermore, the present invention provides a fiber-reinforced composite having the above-mentioned expanded molded article and a fiber-reinforced plastic layer that is laminated and integrated onto a surface of the expanded molded article.

Additionally, the present invention provides an automobile component comprising the above-mentioned expanded molded article or the above-mentioned fiber-reinforced composite.

EFFECTS OF INVENTION

The present invention can provide an expanded molded article exhibiting excellent mechanical physical properties, and expanded particles from which the expanded molded article can be produced.

In the following cases, the present invention can provide an expanded molded article exhibiting more excellent mechanical physical properties, and expanded particles from which the expanded molded article can be produced.

(1) The aromatic vinyl compound is selected from a styrene-based monomer, the (meth)acrylic acid ester is selected from a (meth)acrylic acid alkyl ester (carbon number of an alkyl group is 1 to 5), and the unsaturated dicarboxylic acid is selected from an aliphatic unsaturated dicarboxylic acid having 2 to 6 carbon atoms, and when a total of units derived from three of the aromatic vinyl compound, the (meth)acrylic acid ester, and the unsaturated dicarboxylic acid is 100 parts by weight, the copolymer comprises 30 to 80 parts by weight of the unit derived from the aromatic vinyl compound, 8 to 35 parts by weight of the unit derived from the (meth)acrylic acid ester, and 10 to 50 parts by weight of the unit derived from the unsaturated dicarboxylic acid.

(2) The aromatic vinyl compound is selected from styrene, $\alpha$-methylstyrene, vinyltoluene, ethylstyrene, i-propylstyrene, t-butylstyrene, dimethylstyrene, bromostyrene, chlorostyrene, divinylbenzene, trivinylbenzene, divinyltoluene, divinylxylene, bis(vinylphenyl)methane, bis(vinylphenyl)ethane, bis(vinylphenyl)propane, bis(vinylphenyl)butane, divinylnaphthalene, divinylanthracene, divinylbiphenyl, ethylene oxide-added di(meth)acrylate of bisphenol A, and propylene oxide-added di(meth)acrylate of bisphenol A,

the (meth)acrylic acid ester is selected from methyl (meth)acrylate, ethyl (meth)acrylate, propyl (meth)acrylate, and butyl (meth)acrylate, and

the unsaturated dicarboxylic acid is selected from maleic acid, itaconic acid, citraconic acid, aconitic acid, and an anhydride thereof.

BRIEF DESCRIPTION OF THE DRAWINGS

Fig. 1 is a cross-sectional photograph of expanded particles (a: magnification 300) and a cross-sectional photograph of an expanded molded article (b: magnification 300, c: magnification 150) of Example 1.
Fig. 2 is a cross-sectional photograph of expanded particles (a: magnification 300) and a cross-sectional photograph of an expanded molded article (b: magnification 300, c: magnification 150) of Example 2.
Fig. 3 is a cross-sectional photograph of expanded particles (a: magnification 300) and a cross-sectional photograph of an expanded molded article (b: magnification 300, c: magnification 150) of Example 3.
Fig. 4 is a cross-sectional photograph of expanded particles (a: magnification 300) and a cross-sectional photograph of an expanded molded article (b: magnification 300, c: magnification 150) of Example 4.
Fig. 5 is a cross-sectional photograph of expanded particles (a: magnification 300) and a cross-sectional photograph of an expanded molded article (b: magnification 300, c: magnification 150) of Example 5.
Fig. 6 is a cross-sectional photograph of expanded particles (a: magnification 300, b: magnification 150) and a cross-sectional photograph of an expanded molded article (c: magnification 300, d: magnification 150) of Comparative Example 1.
Fig. 7 is a cross-sectional photograph of expanded particles (a: magnification 300, b: magnification 150) and a cross-sectional photograph of an expanded molded article (c: magnification 300, d: magnification 150) of Comparative Example 2.

BEST MODE FOR CARRYING OUT THE INVENTION

(Expanded Particles)

(1) Base Resin

Expanded particles comprise a base resin including a copolymer of an aromatic vinyl compound, a (meth)acrylic acid ester, and an unsaturated dicarboxylic acid. The ratio occupied by the copolymer in the base resin is preferably 70% by weight or more, more preferably 85% by weight or more, and may be 100% by weight. The ratio occupied by the copolymer can take 70% by weight, 75% by weight, 80% by weight, 85% by weight, 90% by weight, 95% by weight or 100% by weight. It is preferable that the copolymer has a glass transition temperature Tg of 115 to 160°C. When the Tg is lower than 115°C, lamination and integration of a skin material onto a surface of an expanded molded article produced using the expanded particles become insufficient, so that mechanical physical properties may deteriorate. When the Tg is higher than 160°C, the expandability of the expanded particles deteriorates and thermal fusion and integration between the expanded particles become insufficient, so that the mechanical physical properties of the expanded molded article may deteriorate. The Tg can take 115°C, 120°C, 125°C, 130°C, 135°C, 140°C, 145°C, 150°C, 155°C or 160°C. The more preferable Tg is 120 to 150°C.

(a) Aromatic Vinyl Compound

An aromatic vinyl compound is an aromatic compound having a substituent of a vinyl group. The number of vinyl groups and the carbon number of the aromatic compound are not particularly limited. Specific examples of the aromatic vinyl compound include styrene-based monofunctional monomers such as styrene, α-methylstyrene, vinyltoluene, ethylstyrene, i-propylstyrene, t-butylstyrene, dimethylstyrene, bromostyrene, and chlorostyrene; divinylbenzene, trivinylbenzene, divinyltoluene, divinylxylene, bis(vinylphenyl)methane, bis(vinylphenyl)ethane, bis(vinylphenyl)propane, bis(vinylphenyl)butane, divinylnaphthalene, divinylanthracene, divinylbiphenyl, ethylene oxide-added di(meth)acrylate of bisphenol A, and propylene oxide-added di(meth)acrylate of bisphenol A. The aromatic vinyl compound may be used alone, or two or more kinds of the aromatic vinyl compound may be used concurrently. Among them, from the viewpoint of easy availability, styrene is preferable.

(b) (Meth)acrylic Acid Ester

A (meth)acrylic acid ester is not particularly limited, and examples thereof include (meth)acrylic acid alkyl esters. The carbon number of an alkyl group in the (meth)acrylic acid alkyl ester can be 1 to 5. Specific examples of the (meth)acrylic acid ester include methyl (meth)acrylate, ethyl (meth)acrylate, propyl (meth)acrylate, butyl (meth)acrylate, and the like. The (meth)acrylic acid ester may be used alone, or two or more kinds of the (meth)acrylic acid ester may be used concurrently. From the viewpoint of improving the mechanical physical properties of the expanded molded article, methyl (meth)acrylate is preferable, and methyl methacrylate is more preferable.

(c) Unsaturated Dicarboxylic Acid

An unsaturated dicarboxylic acid is not particularly limited, and examples thereof include aliphatic unsaturated dicarboxylic acids having 2 to 6 carbon atoms. Specific examples of the unsaturated dicarboxylic acid include maleic acid, itaconic acid, citraconic acid, aconitic acid, an anhydride thereof, and the like. The unsaturated dicarboxylic acid may be used alone, or two or more kinds of the unsaturated dicarboxylic acid may be used concurrently.

(d) Ratio of Units Derived from Aromatic Vinyl Compound, (Meth)acrylic Acid Ester, and Unsaturated Dicarboxylic Acid

When the total of units derived from three of the aromatic vinyl compound, the (meth)acrylic acid ester, and the unsaturated dicarboxylic acid is 100 parts by weight, it is preferable that the unit derived from the aromatic vinyl compound is contained at 30 to 80 parts by weight, the unit derived from the (meth)acrylic acid ester is contained at 8 to 35 parts by weight, and the unit derived from the unsaturated dicarboxylic acid is contained at 10 to 50 parts by weight.
When the ratio occupied by the unit derived from the aromatic vinyl compound is less than 30 parts by weight, the expandability of the expanded particles deteriorates at the time of expansion molding, and thermal fusion and integration between the expanded particles become insufficient, so that the mechanical physical properties of the expanded molded article may deteriorate. When the ratio is more than 80 parts by weight, the heat resistance of the expanded molded article may deteriorate. This ratio can take 30 parts by weight, 35 parts by weight, 40 parts by weight, 45 parts by weight, 50 parts by weight, 55 parts by weight, 60 parts by weight, 65 parts by weight, 70 parts by weight, 75 parts by weight or 80 parts by weight. This ratio is more preferably 40 to 75 parts by weight, and further preferably 45 to 70 parts by weight.
When the ratio occupied by the unit derived from the (meth)acrylic acid ester is less than 8 parts by weight, the mechanical physical properties of the expanded molded article may deteriorate. When the ratio is more than 35 parts by weight, the expandability of the expanded particles deteriorates at the time of expansion molding, and thermal fusion and integration between the expanded particles become insufficient, so that the mechanical physical properties of the expanded molded article may deteriorate. This ratio can take 8 parts by weight, 10 parts by weight, 12 parts by weight, 15 parts by weight, 17 parts by weight, 20 parts by weight, 25 parts by weight, 30 parts by weight, 33 parts by weight or 35 parts by weight. This ratio is more preferably 10 to 33 parts by weight, and further preferably 15 to 30 parts by weight.

When the ratio occupied by the unit derived from the unsaturated dicarboxylic acid is less than 10 parts by weight, the heat resistance of the expanded molded article may deteriorate. When the ratio is more than 50 parts by weight, the expandability of the expanded particles deteriorates at the time of expansion molding, and thermal fusion and integration between the expanded particles become insufficient, so that the mechanical physical properties of the expanded molded article may deteriorate. This ratio can take 10 parts by weight, 15 parts by weight, 20 parts by weight, 25 parts by weight, 30 parts by weight, 35 parts by weight, 40 parts by weight, 45 parts by weight or 50 parts by weight. This ratio is more preferably 15 to 40 parts by weight, and further preferably 20 to 35 parts by weight.

In addition, the use amount of a monomer and the content of a unit derived from the monomer almost coincide with each other.

The ratio of each component, that is, the ratios of units derived from the aromatic vinyl compound, the (meth)acrylic acid ester, and the unsaturated dicarboxylic acid, and furthermore, the ratios of units derived from another monomer and another resin that will be described below can be defined by a peak height of $^1$H-NMR or an area ratio of FT-IR. A specific measuring method will be described in examples.

(e) Another Monomer

In addition to the above-mentioned three monomers, the base resin may be a copolymer with a component derived from another monomer in a range that the characteristics of the present invention are not inhibited. Examples of the other monomer include (meth)acrylonitrile, dimethyl maleate, diethyl maleate, dimethyl fumarate, diethyl fumarate, ethyl fumarate, (meth)acrylic acid, and the like.

The ratio occupied by a unit derived from the other monomer in the base resin is preferably 30% by weight or less, or may be 0% by weight. This ratio can take 0% by weight, 5% by weight, 10% by weight, 15% by weight, 20% by weight, 25% by weight or 30% by weight.

(f) Another Resin

Another resin may be mixed into the base resin. Examples of the other resin include polyolefin-based resins such as polyethylene and polypropylene; rubber-modified impact-resistant polystyrene-based resins in which a diene-based rubber-like polymer such as polybutadiene, a styrene-butadiene copolymer or an ethylene-propylene-non-conjugated diene three-dimensional copolymer is added; a polycarbonate resin, a polyester resin, a polyamide resin, a polyphenylene ether, an acrylonitrile-butadiene-styrene copolymer, an acrylonitrile-styrene copolymer, polymethyl methacrylate, a styrene-(meth)acrylic acid copolymer, a styrene-(meth)acrylic acid ester copolymer, an aromatic vinyl compound-unsaturated dicarboxylic acid-unsaturated dicarboxylic acid imide copolymer, and the like.

It is preferable that polymethyl methacrylate among the above-mentioned other resins is contained in the expanded particles. By containing polymethyl methacrylate, the thermal fusibility of the expanded particles is improved, and the expanded particles can be thermally fused and integrated more firmly, so that the expanded molded article having further excellent mechanical physical properties can be obtained. The content of polymethyl methacrylate in the expanded particles is preferably 10 to 500 parts by weight based on 100 parts by weight of the copolymer. The content can take 10 parts by weight, 20 parts by weight, 30 parts by weight, 50 parts by weight, 100 parts by weight, 200 parts by weight, 300 parts by weight, 400 parts by weight, 450 parts by weight or 500 parts by weight. The content is more preferably 20 to 450 parts by weight, and particularly preferably 30 to 400 parts by weight.

It is preferable that an acrylic-based resin as a processing auxiliary agent is contained in the expanded particles. By containing the processing auxiliary agent, the melt tension (viscoelasticity) at the time of expansion of resins constituting the expanded particles is made suitable for expansion, to refrain the expanded particles from forming open cells, the expandability of the expanded particles is improved to make thermal fusion between the expanded particles more firmly, and the expanded molded article having further excellent mechanical physical properties can be produced. The content of the processing auxiliary agent in the expanded particles is preferably 0.5 to 5 parts by weight, and more preferably 0.5 to 3 parts by weight, based on 100 parts by weight of the copolymer.

The acrylic-based resin as the processing auxiliary agent is not particularly limited, and examples thereof include a homopolymer of an acrylic-based monomer, a copolymer containing two or more kinds of the monomer, a copolymer of an acrylic-based monomer in an amount of 50% by weight or more and a vinyl monomer copolymerizable with the acrylic-based monomer, and the like. Examples of the acrylic-based monomer include methyl acrylate, ethyl acrylate, butyl acrylate, methyl methacrylate, ethyl methacrylate, butyl methacrylate, and the like. Examples of the vinyl monomer copolymerizable with the acrylic-based monomer include α-methylstyrene, acrylonitrile, and the like. The weight average molecular weight of the acrylic-based resin is preferably 1,500,000 to 6,000,000, more preferably 2,000,000 to 4,500,000, and particularly preferably 2,500,000 to 4,000,000. When the weight average molecular weight of the acrylic-based resin is too low or too high, it is difficult to sufficiently adjust the melt tension (viscoelasticity) at the time of expansion molding of resins constituting the expanded particles to melt tension suitable for expansion, and the expandability of the expanded particles may not be improved.

(g) Aromatic Vinyl Compound-Unsaturated Dicarboxylic Acid-Unsaturated Dicarboxylic Acid Imide Copolymer

As the above-mentioned (f) another resin, an aromatic vinyl compound-unsaturated dicarboxylic acid-unsaturated dicarboxylic acid imide copolymer is preferable from the viewpoint of improving the heat resistance of the expanded molded article.

The aromatic vinyl compound is not particularly limited, and examples thereof include the above-mentioned compounds exemplified in (a). The aromatic vinyl compound may be used alone, or two or more kinds of the aromatic vinyl compound may be used concurrently. Among them, styrene is preferable from the viewpoint of easy availability.

The unsaturated dicarboxylic acid is not particularly limited, and examples thereof include the above-mentioned compounds exemplified in (c). The unsaturated dicarboxylic acid may be used alone, or two or more kinds of the unsaturated dicarboxylic acid may be used concurrently. From the viewpoint of improving the mechanical physical properties of the expanded molded article, maleic anhydride is preferable.

The unsaturated dicarboxylic acid imide is not particularly limited, and examples thereof include maleimide-based monomers such as maleimide, N-methylmaleimide, N-ethylmaleimide, N-cyclohexylmaleimide, N-phenylmaleimide, N-naphthylmaleimide, and the like. The unsaturated dicarboxylic acid imide derivative may be used alone, or two or more kinds of the unsaturated dicarboxylic acid imide derivative may be used concurrently. From the viewpoint of improving the heat resistance of the expanded molded article, N-phenylmaleimide is preferable.

As the ratios of units derived from the aromatic vinyl compound, the unsaturated dicarboxylic acid, and the unsaturated dicarboxylic acid imide, when the total of units derived from the three compounds is 100 parts by weight, it is preferable that the unit derived from the aromatic vinyl compound is contained at 20 to 80 parts by weight, the unit derived from the unsaturated dicarboxylic acid is contained at 2 to 30 parts by weight, and the unit derived from the unsaturated dicarboxylic acid imide is contained at 20 to 80 parts by weight.

When the ratio occupied by the unit derived from the aromatic vinyl compound is less than 20 parts by weight, the expandability of the expanded particles deteriorates at the time of expansion molding, and thermal fusion and integration between the expanded particles become insufficient, so that the mechanical physical properties of the expanded molded article may deteriorate. When this ratio is more than 80 parts by weight, the heat resistance of the expanded molded article may deteriorate. This ratio is more preferably 30 to 75 parts by weight, and further preferably 50 to 70 parts by weight.

(h) Additive

The base resin may contain an additive in addition to resins, as necessary. Examples of the additive include plasticizers, flame retardants, flame retardant auxiliary agents, antistatic agents, spreading agents, cell regulators, fillers, coloring agents, weathering agents, anti-aging agents, lubricants, antifogging agents, perfumes, and the like.

(2) Constitution

The expanded particles have an average cell diameter of 5 to 50 $\mu$m and a standard deviation of the average cell diameter of less than 0.8.

When the average cell diameter is less than 5 $\mu$m, a cell membrane becomes thin and cells are broken, so that the expandability may deteriorate. On the other hand, when the average cell diameter is greater than 50 $\mu$m, the mechanical strength may be reduced. The average cell diameter can take 5 $\mu$m, 7 $\mu$m, 10 $\mu$m, 15 $\mu$m, 20 $\mu$m, 25 $\mu$m, 30 $\mu$m, 40 $\mu$m or 50 $\mu$m. The average cell diameter is preferably 5 to 30 $\mu$m, and more preferably 7 to 20 $\mu$m.

When the standard deviation of the average cell diameter is 0.8 or more, local stress concentration is generated on a cell membrane upon application of a load, and mechanical physical properties may deteriorate. The standard deviation can take less than 0.8, 0.7, 0.6, 0.5, 0.4, 0.3, 0.2, 0.1 or 0. The standard deviation is preferably less than 0.7, and more preferably less than 0.5.

In addition, it is preferable that the sum of the total area of cells having a cell diameter of 5 to 50 $\mu$m is 80% or more of the total area of whole cells. The sum can take 80%, 90% or 100%.

A method of measurement and method of calculation of the average cell diameter of the expanded particles and the standard deviation of the average cell diameter will be described in detail in examples.

The average particle diameter of the expanded particles is preferably 600 to 6,000 $\mu$m, and more preferably 1,200 to 3,600 $\mu$m.

The outer shape of the expanded particles is not particularly limited as long as the expanded molded article can be produced, and examples thereof include a spherical shape, a substantially spherical shape, a cylindrical shape, and the like. It is preferable that the expanded particles have an outer shape having an average aspect ratio of 0.8 or more (the upper limit is a true spherical shape having an aspect ratio of 1).

It is preferable that the expanded particles have a bulk expansion ratio of 30 to 1.4. When the bulk expansion ratio is more than 30, the open cell ratio of the expanded particles increases, and the expandability of the expanded particles may deteriorate at the time of expansion molding. When the bulk expansion ratio is less than 1.4, cells of the expanded particles become ununiform, and the expandability of the expanded particles at the time of expansion molding may become insufficient. The bulk expansion ratio is more preferably 25 to 1.6, and particularly preferably 20 to 2.

It is preferable that the expanded particles exhibit an open cell ratio of 40% or less. When the open cell ratio is more than 40%, the expansion pressure of the expanded particles is deficient at the time of expansion molding, and thermal fusion and integration between the expanded particles become insufficient, so that the mechanical physical properties of the expanded molded article may deteriorate. The open cell ratio can take 40%, 35%, 30%, 25%, 20%, 15%, 10%, 5% or 0%. It is more preferable that the open cell ratio is 35% or less.

(3) Production Method

Examples of a method for producing the expanded particles include a method of impregnating resin particles with a blowing agent in a vapor phase to obtain expandable particles, and expanding the expandable particles.

First, examples of a method for producing the resin particles include:

(i) a method for producing resin particles by melting and kneading raw material resins (a mixture of constituent resins of the base resin) in an extruder, cutting the kneaded product while being extruded from a nozzle mold attached to the extruder, and thereafter, cooling the cut kneaded product;

(ii) a method for producing resin particles by melting and kneading raw material resins in an extruder, extruding the kneaded product from a nozzle mold attached to the extruder, thereafter, cooling the extruded kneaded product to obtain a strand, and cutting the strand at a predetermined interval;

(iii) a method for producing resin particles by melting and kneading raw material resins in an extruder, extruding the kneaded product from an annular die or T die attached to the extruder to produce a sheet, and cutting the sheet;

and the like. In addition, it is preferable that a cell regulator is fed to the extruder. Examples of the cell regulator include polytetrafluoroethylene powder, polytetrafluoroethylene powder modified with an acrylic resin, talc, and the like. It is preferable that the amount of the cell regulator is 0.01 to 5 parts by weight based on 100 parts by weight of the resin composition. When the amount of the cell regulator is less than 0.01 parts by weight, the cells of the expanded particles become coarse, and the appearance of the resulting expanded molded article may deteriorate. When the amount is more than 5 parts by weight, the closed cell ratio of the expanded particles may be reduced by cells breaking. The amount of the cell regulator is more preferably 0.05 to 3 parts by weight, and particularly preferably 0.1 to 2 parts by weight.

Then, examples of a method for producing the expandable particles include a method of impregnating resin particles with a blowing agent in a vapor phase in a sealable container. Examples of the blowing agent include saturated aliphatic hydrocarbons such as propane, normal butane, isobutane, normal pentane, isopentane, and hexane; ethers such as dimethyl ether; methyl chloride; fluorocarbons such as 1,1,1,2-tetrafluoroethane, 1,1-difluoroethane, and monochlorodifluoromethane; and inorganic gas such as carbon dioxide and nitrogen. Inter alia, dimethyl ether, propane, normal butane, isobutane, and carbon dioxide are preferable, propane, normal butane, isobutane, and carbon dioxide are more preferable, and carbon dioxide is particularly preferable. In addition, the blowing agent may be used alone, or two or more kinds of the blowing agent may be used concurrently.

When the amount of the blowing agent to be placed into the container is too small, the expanded particles may not be expanded up to a desired expansion ratio. When the amount of the blowing agent is too large, since the blowing agent acts as a plasticizer, the viscoelasticity of the base resin is reduced too much to deteriorate the expandability, so that the good expanded particles may not be obtained. Accordingly, the amount of the blowing agent is preferably 0.1 to 5 parts by weight, more preferably 0.2 to 4 parts by weight, and particularly preferably 0.3 to 3 parts by weight based on 100 parts by weight of the raw material resins.

Furthermore, an example of the method for producing the expanded particles includes a method of performing heating with a heating medium such as water steam in a sealable container. Examples of heating conditions include a gauge pressure of 0.3 to 0.5 MPa, a temperature of 120 to 159°C, and a time of 10 to 180 seconds.

The particle diameter of the expanded particles can be varied by changing the diameter of a multi-nozzle mold attached to a front end of the extruder, or the like.

A bonding inhibitor may be adhered to the surface of the expandable particles. Examples of the bonding inhibitor include calcium carbonate, silica, talc, zinc stearate, magnesium stearate, aluminum hydroxide, ethylenebis(stearic acid amide), methylenebis(stearic acid amide), tribasic calcium phosphate, dimethylsilicone, and the like. The bonding inhibitor can be adhered to the surface of the expandable particles by mixing the bonding inhibitor and the expandable particles in the container. The bonding inhibitor may be or may not be removed from the expanded particles before expansion molding.

(Expanded Molded Article)

(1) Base Resin

A base resin constituting the expanded molded article is the same as the above-mentioned base resin of the expanded particles.

(2) Physical Properties

The expanded molded article has an average cell diameter of 5 to 60 $\mu$m and a standard deviation of the average cell diameter of less than 0.8.

When the average cell diameter is less than 5 $\mu$m, a cell membrane becomes thin, and cells are broken, so that the mechanical strength may be reduced. On the other hand, when the average cell diameter is greater than 60 $\mu$m, the appearance of a molded article may deteriorate. The average cell diameter can take 5 $\mu$m, 7 $\mu$m, 10 $\mu$m, 15 $\mu$m, 20 $\mu$m, 25 $\mu$m, 30 $\mu$m, 40 $\mu$m, 50 $\mu$m or 60 $\mu$m. The average cell diameter is preferably 5 to 30 $\mu$m, and more preferably 7 to 20 $\mu$m.

When the standard deviation of the average cell diameter is 0.8 or more, local stress concentration is generated on a cell membrane upon application of a load, and mechanical physical properties may deteriorate. The standard deviation can take less than 0.8, 0.7, 0.6, 0.5, 0.4, 0.3, 0.2, 0.1 or 0. The standard deviation is preferably less than 0.7, and more preferably less than 0.5.

In addition, it is preferable that the sum of the total area of cells having a cell diameter of 5 to 50 $\mu$m is 80% or more of the total area of whole cells.

A method of measurement and method of calculation of the average cell diameter of the expanded molded article and the standard deviation of the average cell diameter will be described in detail in examples.

The average particle diameter of fused expanded particles constituting the expanded molded article is preferably 600 to 6,000 $\mu$m, and more preferably 1,200 to 3,600 $\mu$m.

The outer shape of the fused expanded particles is not particularly limited as long as the expanded molded article can be maintained.

It is preferable that the expanded molded article has an expansion ratio of 30 to 1.4. When the expansion ratio is more than 30, mechanical physical properties may become insufficient. When the expansion ratio is less than 1.4, since the weight is increased, an advantage of expansion may become small. The expansion ratio is more preferably 25 to 1.6, and particularly preferably 20 to 2.

It is preferable that the expanded molded article exhibits an open cell ratio of 40% or less. When the open cell ratio is more than 40%, the mechanical physical properties of the expanded molded article may deteriorate. The open cell ratio is more preferably 35% or less.

It is preferable that the heating dimensional change rate at 120°C of the expanded molded article is -1 to 1%. The expanded molded article can also be suitably used in applications under the high temperature environment because of its heating dimensional change rate of -1 to 1%.

The bending elastic modulus per unit density in the expanded molded article is preferably 600 MPa/(g/cm$^3$) or more. When the bending elastic modulus is too small, the expanded molded article may be deformed by pressure applied when a skin material such as a fiber-reinforced plastic is laminated and integrated onto the surface of the expanded molded article.

(3) Production Method

An example of a method for producing the expanded molded article includes a method of obtaining the expanded molded article by filling the expanded particles into a cavity of a mold, feeding a heating medium into the cavity, heating the expanded particles to re-expand the particles, and mutually thermally fusing and integrating the re-expanded expanded particles by the expansion pressure of the re-expanded expanded particles. Examples of the heating medium include water steam, hot blast, warm water, and the like, and water steam is preferable.

(4) Applications

The expanded molded article is excellent in lightness, heat resistance, and mechanical physical properties, and is particularly excellent in load bearing resistance under the high temperature environment. For that reason, the expanded molded article can be suitably used in components of transportation equipment such as automobiles, aircraft, railway vehicles, and watercraft. Examples of the component of automobiles include components used in the vicinity of engines, exterior materials, and the like.

The present invention provides an automobile component comprising the expanded molded article of the present invention, and examples of the automobile component include components such as floor panels, roofs, hoods, fenders, undercovers, wheels, steering wheels, containers (housings), hood panels, suspension arms, bumpers, sun visors, trunk lids, luggage boxes, seats, doors, and the like.

The expanded molded article may be used as a reinforced composite by laminating and integrating a skin material onto the surface of the expanded molded article. When the expanded molded article is an expanded sheet, it is not necessary that the skin material is laminated and integrated onto both surfaces of the expanded molded article, and the skin material may be laminated and integrated onto at least one surface of both surfaces of the expanded molded article. The lamination of the skin material may be determined depending on the applications of the reinforced composite. Inter alia, when the surface hardness and mechanical strength of the reinforced composite are taken into consideration, it is preferable that the skin material is laminated and integrated onto each of both surfaces in the thickness direction of the expanded molded article.

The skin material is not particularly limited, and examples thereof include fiber-reinforced plastics, metal sheets, synthetic resin films, and the like. Among them, fiber-reinforced plastics are preferable. A reinforced composite in which a fiber-reinforced plastic is used as the skin material is referred to as a fiber-reinforced composite.

Examples of a reinforcing fiber constituting the fiber-reinforced plastic include inorganic fibers such as a glass fiber, a carbon fiber, a silicon carbide fiber, an alumina fiber, a tyranno fiber, a basalt fiber, and a ceramic fiber; metal fibers such as a stainless fiber and a steel fiber; organic fibers such as an aramid fiber, a polyethylene fiber, and a polyparaphenylene benzoxazole (PBO) fiber; and a boron fiber. The reinforcing fiber may be used alone, or two or more kinds of the reinforcing fiber may be used concurrently. Among them, a carbon fiber, a glass fiber, and an aramid fiber are preferable, and a carbon fiber is more preferable. These reinforcing fibers have excellent mechanical physical properties in spite of their lightweight.

It is preferable that the reinforcing fiber is used as a reinforcing fiber substrate that has been processed into a desired shape. Examples of the reinforcing fiber substrate include a woven fabric, a knitted fabric, and a non-woven fabric, all including the reinforcing fiber, and a surface material in which fiber bundles (strands) obtained by arranging reinforcing fibers in one direction are bound (sutured) with threads, and the like. Examples of the way of weaving the woven fabric include plain weaving, twill weaving, sateen weaving, and the like. Examples of the thread include synthetic resin threads such as a polyamide resin thread and a polyester resin thread; and stitch threads such as a glass fiber thread.

As the reinforcing fiber substrate, only one reinforcing fiber substrate may be used without lamination, or a plurality of reinforcing fiber substrates may be laminated, and used as a laminated reinforcing fiber substrate. As the laminated reinforcing fiber substrate in which a plurality of reinforcing fiber substrates have been laminated, used are (1) a laminated reinforcing fiber substrate obtained by preparing a plurality of only one kind of reinforcing fiber substrates and laminating these reinforcing fiber substrates; (2) a laminated reinforcing fiber substrate obtained by preparing a plurality of kinds of reinforcing fiber substrates and laminating these reinforcing fiber substrates; (3) a laminated reinforcing fiber substrate obtained by preparing a plurality of reinforcing fiber substrates in which fiber bundles (strands) obtained by arranging reinforcing fibers in one direction are bound (sutured) with threads, superimposing these reinforcing fiber substrates so that the fiber directions of the fiber bundles face mutually different directions, and integrating (suturing) the superimposed reinforcing fiber substrates with threads; and the like.

The fiber-reinforced plastic is such that reinforcing fibers are impregnated with a synthetic resin. The reinforcing fibers are bound and integrated with the impregnated synthetic resin.

A method of impregnating the reinforcing fibers with the synthetic resin is not particularly limited, and examples thereof include (1) a method of immersing the reinforcing fibers in the synthetic resin; (2) a method of coating the reinforcing fibers with the synthetic resin; and the like.

As the synthetic resin with which the reinforcing fibers are impregnated, any of a thermoplastic resin or a thermosetting resin can be used, and a thermosetting resin is preferably used. The thermosetting resin with which the reinforcing fibers are impregnated is not particularly limited, and examples thereof include an epoxy resin, an unsaturated polyester resin, a phenol resin, a melamine resin, a polyurethane resin, a silicone resin, a maleimide resin, a vinyl ester resin, a cyanic acid ester resin, a resin obtained by pre-polymerizing a maleimide resin and a cyanic acid ester resin, and the like. An epoxy resin and a vinyl ester resin are preferable because they are excellent in heat resistance, impact absorbability or chemical resistance. An additive such as a hardener or a hardening accelerator may be contained in the thermosetting resin. In addition, the thermosetting resin may be used alone, or two or more kinds of the thermosetting resin may be used concurrently.

The thermoplastic resin with which the reinforcing fibers are impregnated is not particularly limited, and examples thereof include an olefin-based resin, a polyester-based resin, a thermoplastic epoxy resin, an amide-based resin, a thermoplastic polyurethane resin, a sulfide-based resin, an acrylic-based resin, and the like. A polyester-based resin and a thermoplastic epoxy resin are preferable because they are excellent in adhesiveness with the expanded molded article or adhesiveness between reinforcing fibers constituting the fiber-reinforced plastic. In addition, the thermoplastic resin may be used alone, or two or more kinds of the thermoplastic resin may be used concurrently.

Examples of the thermoplastic epoxy resin include a polymer or a copolymer having a straight-chain structure which is formed of epoxy compounds, and a copolymer having a straight-chain structure which is formed of an epoxy compound and a monomer polymerizable with this epoxy compound, the copolymer having a straight-chain structure. Specifically, examples of the thermoplastic epoxy resin include a bisphenol A type epoxy resin, a bisphenol fluorene type epoxy resin, a cresol novolak type epoxy resin, a phenol novolak type epoxy resin, a cyclic aliphatic type epoxy resin, a long chain aliphatic type epoxy resin, a glycidyl ester type epoxy resin, a glycidyl amine type epoxy resin, and the like, and a bisphenol A type epoxy resin and a bisphenol fluorene type epoxy resin are preferable. In addition, the thermoplastic epoxy resin may be used alone, or two or more kinds of the thermoplastic epoxy resin may be used concurrently.

Examples of the thermoplastic polyurethane resin include polymers having a straight-chain structure, which is obtained by polymerizing a diol and a diisocyanate. Examples of the diol include ethylene glycol, diethylene glycol, propylene glycol, dipropylene glycol, 1,3-butanediol, 1,4-butanediol, and the like. The diol may be used alone, or two or more kinds of the diol may be used concurrently. Examples of the diisocyanate include an aromatic diisocyanate, an aliphatic diisocyanate, and an alicyclic diisocyanate. The diisocyanate may be used alone, or two or more kinds of the diisocyanate may be used concurrently. In addition, the thermoplastic polyurethane resin may be used alone, or two or more kinds of the thermoplastic polyurethane resin may be used concurrently.

The content of the synthetic resin in the fiber-reinforced plastic is preferably 20 to 70% by weight. When the content is less than 20% by weight, the bindability between the reinforcing fibers and the adhesiveness between the fiber-reinforced plastic and the expanded molded article become insufficient, so that the mechanical physical properties of the fiber-reinforced plastic and the mechanical strength of the fiber-reinforced composite may not be sufficiently improved. When the content is more than 70% by weight, the mechanical physical property of the fiber-reinforced plastic deteriorates, so that the mechanical strength of the fiber-reinforced composite may not be improved sufficiently. The content is more preferably 30 to 60% by weight.

The thickness of the fiber-reinforced plastic is preferably 0.02 to 2 mm, and more preferably 0.05 to 1 mm. The fiber-reinforced plastic having a thickness within this range is excellent in mechanical physical properties in spite of its lightweight.

The weight per unit area of the fiber-reinforced plastic is preferably 50 to 4,000 g/m$^2$, and more preferably 100 to 1,000 g/m$^2$. The fiber-reinforced plastic having a weight per unit area within this range is excellent in mechanical physical properties in spite of its lightweight.

Next, a method for producing the reinforced composite will be described. A method of laminating and integrating the skin material onto the surface of the expanded molded article to produce the reinforced composite is not particularly limited, and examples thereof include (1) a method of laminating and integrating the skin material onto the surface of the expanded molded article via an adhesive agent; (2) a method of laminating a fiber-reinforced plastic forming material, in which reinforcing fibers are impregnated with a thermoplastic resin, on the surface of the expanded molded article, and laminating and integrating the fiber-reinforced plastic forming material as the fiber-reinforced plastic onto the surface of the expanded molded article with use of the thermoplastic resin, with which the reinforcing fibers have been impregnated, as a binder; (3) a method of laminating a fiber-reinforced plastic forming material, in which reinforcing fibers are impregnated with an uncured thermosetting resin, on the surface of the expanded molded article, and laminating and integrating the fiber-reinforced plastic formed by curing the thermosetting resin onto the surface of the expanded molded article with use of the thermosetting resin, with which the reinforcing fibers have been impregnated, as a binder; (4) a method of disposing the skin material which has been heated and brought into a softened state on the surface of the expanded molded article, pressing the skin material on the surface of the expanded molded article, and thereby, laminating and integrating the skin material onto the surface of the expanded molded article while the skin material is deformed if necessary along the surface of the expanded molded article; (5) a method that is generally applied in molding of the fiber-reinforced plastic; and the like. From the viewpoint that the expanded molded article is excellent in mechanical physical properties such as load bearing resistance under the high temperature environment, the above-mentioned method of (4) can also be suitably used.

Examples of a method used in molding of the fiber-reinforced plastic include an autoclave method, a hand lay-up method, a spray up method, a prepreg compression molding (PCM) method, a resin transfer molding (RTM) method, a vacuum assisted resin transfer molding (VaRTM) method, and the like.

The thus obtained fiber-reinforced composite is excellent in heat resistance, mechanical strength, and lightness. For that reason, the fiber-reinforced composite can be used in wide applications such as the field of transportation equipment including automobiles, aircraft, railway vehicles, and watercraft, the field of home electric appliances, the field of information terminals, and the field of household furniture.

For example, the fiber-reinforced composite can be suitably used as components for constituting transportation equipment including components of transportation equipment and structural components constituting a body of transportation equipment (particularly, automobile components), wind turbines, robot arms, helmet buffering materials, transportation containers such as agricultural product boxes and heat/cold insulating containers, rotor blades of an industrial helicopter, and component packaging materials.

The present invention provides an automobile component comprising the fiber-reinforced composite of the present invention, and examples of the automobile component include components such as floor panels, roofs, hoods, fenders, undercovers, wheels, steering wheels, containers (housings), hood panels, suspension arms, bumpers, sun visors, trunk lids, luggage boxes, seats, doors, and the like.

EXAMPLES

The present invention will be described in further detail below by way of examples, but is not limited by the present examples at all. First, measurement methods and evaluation methods in examples and comparative examples will be described.

(Average Cell Diameter)

The average cell diameter of cells in expanded particles and expanded molded article was measured as follows.
The central part of a cross section obtained by substantially dividing expanded particles into two was photographed at the central parts of the particles using a scanning electron microscope "SU1510" manufactured by Hitachi High-Technologies Corporation.
At that time, the microphotograph was taken so that predetermined magnification was obtained when the microphotograph was printed on one A4 sheet in the transverse orientation in the state where lengthwise and crosswise two images (total four images) were arranged. Specifically, magnification of the electron microscope was adjusted so that when an arbitrary 60 mm straight line parallel with each of the longitudinal direction (vertical direction of image) and the transverse direction (crosswise direction of image) was drawn on the image printed as described above, the number of cells existing on the arbitrary straight line became approximately 10 to 50. For a cross section of two expanded particles, microphotographs of a total of two fields were taken for every field and printed on an A4 sheet as described above.
Three arbitrary straight lines (length 60 mm) parallel in the longitudinal direction and the transverse direction were drawn on each of the two images of the cross section of the expanded particles, and six arbitrary straight lines were drawn in each direction.
In addition, the arbitrary straight lines were set so that cells did not come into contact with each other only at a contact point as much as possible, and when they came into contact with each other, the cells were also added to the number. The number of cells which had been counted for six arbitrary straight lines in each of the longitudinal direction and the transverse direction was arithmetically averaged, and was defined as the number of cells in each direction.
From the magnification of the image for which the number of cells had been counted and the number of cells, the average arc length (t) of the cells was calculated by the following equation.

$$\text{Average arc length t (mm)} = 60/(\text{number of cells} \times \text{magnification of photograph})$$

The scale bar was measured up to 1/100 mm with "Digimatic Caliper" manufactured by Mitutoyo Corporation, and the magnification of the image was obtained by the following equation.

$$\text{Image magnification} = \text{scale bar actually measured value (mm)/scale bar indicated value (mm)}$$

Then, the cell diameter in each direction was calculated by the following equation.

$$\text{Cell diameter D (mm)} = t/0.616$$

Furthermore, the square root of the product thereof was defined as an average cell diameter.

$$\text{Average cell diameter (mm)} = (\text{D longitudinal} \times \text{D transverse})^{1/2}$$

(Standard Deviation)

The standard deviation of the cell diameter of cells in expanded particles and the expanded molded article was measured as follows.

An arbitrary part of the expanded particles and the expanded molded article was cut using a razor blade to obtain a cut section. The central part of this cut section was photographed using a scanning microscope "SU1510" manufactured by Hitachi High-Technologies Corporation.

At that time, the microphotograph was taken so that predetermined magnification was obtained when the microphotograph was printed on one A4 sheet in the transverse orientation in the state where lengthwise and crosswise two images (total four images) were arranged. Specifically, magnification of the electron microscope was adjusted so that when an arbitrary 60 mm straight line parallel with each of the longitudinal direction (vertical direction of image) and the transverse direction (crosswise direction of image) was drawn on the image printed as described above, the number of cells existing on the arbitrary straight line became approximately 10 to 50.

Three arbitrary straight lines (length 60 mm) parallel in the longitudinal direction and the transverse direction were drawn on each of the two images of the cross section of the expanded particles, and six arbitrary straight lines were drawn in each direction.

For cells on the straight lines, a cell diameter was calculated. In addition, the arbitrary straight lines were set so that cells did not come into contact with each other only at a contact point as much as possible, and when they came into contact with each other, the cells were also added to the number. As the cell diameter, a value was used which was obtained by the measurement of the long diameter and short diameter of a cross section of the cell, and the arithmetic average of the short diameter and the long diameter. Specifically, arbitrary two points were selected where the mutual distance was maximum on the outer contour line of the cross section of the cell, and the distance between these two points was defined as the "long diameter of the cell". Of arbitrary two points at which a straight line orthogonal to the long diameter of the cell and the outer contour line of the cross section of the cell were intersected, arbitrary two points were selected where the mutual distance was maximum, and the distance between these two points was defined as the "short diameter of the cell".

The standard deviation was calculated by the following equation, based on the cell diameter d of each of cells, the average cell diameter D of whole cells, and the number of cells n.

$$\text{Standard deviation} = \sqrt{[\sum\{(d - D)^2/n\}]}/D$$

(Glass Transition Temperature)

The glass transition temperature was measured by the method described in JIS K7121:1987 "Testing Methods for Transition Temperatures of Plastics", provided that the sampling method and the temperature conditions were as follows.

About 6 mg of a sample was filled on the bottom of a measurement container made of aluminum without gaps, using a differential scanning calorimeter DSC6220 type (manufactured by SII Nano Technology Inc.). The temperature of the sample was raised from 30°C to 220°C at a temperature raising rate of 20°C/min. under a nitrogen gas flow rate of 20 mL/min. After the temperature was retained for 10 minutes, the sample was rapidly taken out and allowed to cool under an environment at 25 $\pm$ 10°C. Then, the glass transition temperature (initiation point) was calculated from the DSC curve obtained when the temperature was raised from 30°C to 220°C at a temperature raising rate of 20°C/min. At that time, alumina was used as a standard substance. The glass transition initiation temperature was obtained by the standards (9.3 "Method for Determining the Glass Transition Temperature").

(Bulk Density and Bulk Expansion Ratio)

The bulk density was measured in accordance with JIS K6911:1995 "Testing Methods for Thermosetting Plastics". That is, the bulk density was measured using an apparent density measurement instrument in accordance with JIS K6911 and calculated based on the following equation.

$$\text{Bulk density of expanded particles } (g/cm^3) = [\text{weight of measuring cylinder}$$

$$\text{containing sample } (g) - \text{weight of measuring cylinder } (g)]/[\text{volume of measuring cylinder}$$

$$(cm^3)]$$

As the bulk expansion ratio, a value was used which was obtained by multiplying the reciprocal of the bulk density and the density of a resin.

(Density and Expansion Ratio)

The weight (a) and volume (b) of a test piece (for example, $75 \times 300 \times 30$ mm) which had been cut out from the expanded molded article were measured so that each had three or more significant digits, and the density (g/cm$^3$) of the expanded molded article was obtained by the equation (a)/(b).
As the expansion ratio, a value was used which was obtained by multiplying the reciprocal of the density and the density of a resin.

(Open Cell Ratio)

The open cell ratio was measured as follows.
First, a sample cup for a volumetric air-comparison pycnometer was prepared, and the total weight A (g) of the expanded particles (or expanded molded article) in an amount satisfying about 80% of this sample cup was measured. Next, the volume B (cm$^3$) of the above-mentioned whole expanded particles (or expanded molded article) was measured using a pycnometer by the 1-1/2-1 atmospheric pressure method. In addition, as the volumetric air-comparison pycnometer, a product name "Model 1000" manufactured by Tokyo Science Co., Ltd. was used.
Subsequently, a container made of a wire net was prepared, the container made of a wire net was immersed in water, and the weight C (g) of the container made of a wire net in the state where it was immersed in water was measured. Next, the whole expanded particles (or expanded molded article) were placed into the container made of a wire net, and thereafter, the container made of a wire net was immersed in water. The weight D (g) was measured which was the sum of the weight of the container made of a wire net in the state where it was immersed in water, and the weight of the expanded particles (or expanded molded article) placed in the container made of a wire net.
Then, the apparent volume E (cm$^3$) of the expanded particles (or volume E (cm$^3$) of the expanded molded article) was calculated based on the following equation, and the open cell ratio of the expanded particles for expansion molding was calculated based on the volume E and the volume B (cm$^3$) of the whole expanded particles. In addition, as the volume of 1 g of water, 1 cm$^3$ was used.

$$E = A + (C - D)$$

$$\text{Open cell ratio } (\%) = 100 \times (E - B)/E$$

(Heating Dimensional Change Rate)

The heating dimensional change rate was measured by the B method described in JIS K6767:1999 "Cellular Plastics - Polyethylene - Methods of Test". Specifically, a test piece was cut out from the expanded molded article, the test piece having a square having one side of 150 mm in a planar shape and having a thickness that was the thickness of the expanded molded article.
Three 100 mm straight lines were drawn mutually parallel on the central part of the test piece in each of the longitudinal direction and the transverse direction at an interval of 50 mm. The lengths of the three straight lines were measured in each of the longitudinal direction and the transverse direction, and the arithmetic average value $L_0$ of the lengths was used as an initial dimension. Thereafter, the test piece was allowed to stand in a hot air circulation-type dryer at 120°C over 168 hours to be subjected to a heating test. Then, the test piece was taken out and allowed to stand at 25°C over 1 hour. Then, the lengths of the three straight lines in each of the longitudinal direction and the transverse direction, which had been drawn on the surface of the test piece, were measured, and the arithmetic average value Li of the lengths was used as a dimension after heating. The heating dimensional change rate was calculated based on

the following equation.

$$\text{Heating dimensional change rate (\%)} = 100 \times (L_1 - L_0)/L_0$$

(Bending Elastic Modulus)

The bending elastic modulus was measured by a method in accordance with JIS K7221-1:2006 "Rigid Cellular Plastics - Bending Test - Part 1: Determination of Flexural Properties". That is, a rectangular parallelepiped-shaped test piece having a length of 20 mm × a width of 25 mm × a height of 130 mm was cut out from the expanded molded article. For measurement, a tensilon universal testing machine ("UCT-10T" manufactured by ORIENTEC Co., LTD.) was used. The bending elastic modulus was calculated using a universal testing machine data processing system ("UTPS-237S Ver, 1.00" manufactured by SOFTBRAIN Co., Ltd.). The number of the test pieces was 5 or more, and the test piece was conditioned over 16 hours under the standard atmosphere of JIS K 7100:1999, symbol "23/50" (temperature 23°C, relative humidity 50%), Class 2, and thereafter, the measurement was performed under the same standard atmosphere. Each arithmetic average value of the compression elastic modulus of each test piece was used as the bending elastic modulus of the expanded molded article.
The bending elastic modulus was calculated using a straight line part at the beginning of the load-deformation curve by the following equation.

$$E = \Delta\sigma/\Delta\varepsilon$$

E:    Bending elastic modulus (MPa)
$\Delta\sigma$:    Difference in stress between two points on straight line (MPa)
$\Delta\varepsilon$:    Difference in deformation between the same two points (%)

The bending elastic modulus per unit density was calculated by dividing the bending elastic modulus by the density of the expanded molded article.

(Bending Maximum Point Stress)

Concerning the fiber-reinforced composite, a strip-like test piece having a transverse directional dimension of 25 mm and a depth directional dimension of 130 mm was cut out, and a bending test was performed to obtain the bending strength. For the measurement, a tensilon universal testing machine ("UCT-10T" manufactured by ORIENTEC Co., LTD.) was used. The bending maximum point stress of the bending strength was calculated using a universal testing machine data processing system ("UTPS-237S Ver, 1.00" manufactured by SOFTBRAIN Co., Ltd.).
The strip-like test piece was placed on a supporting stand, and the bending maximum point stress was measured under conditions of a load cell of 1,000N, a test speed of 10 mm/min., a front jig on the supporting stand of 10R, and an opening width of 100 mm. The number of the test pieces was 5 or more, and the test piece was conditioned over 16 hours under the standard atmosphere of JIS K 7100:1999, symbol "23/50" (temperature 23°C, relative humidity 50%), Class 2, and thereafter, the measurement was performed under the same standard atmosphere. Each arithmetic average value of the bending maximum point stress of each test piece was used as the bending maximum point stress of the fiber-reinforced composite.

(Ratio of Resin Component of Base Resin)

($^1$H-NMR)

The measurement was performed under the following conditions using an ECX400P-type nuclear magnetic resonance apparatus manufactured by JOEL Ltd.

<Measuring Conditions>
• Measurement mode    single pulse
• Pulse width    45° (6.05 microseconds)
• Point number    32k
• Repetition time    7.0 seconds

(continued)

| | |
|---|---|
| • Integration times | 128 |
| • Measurement solvent | deuterated chloroform |
| • Sample concentration | about 20 mg/0.6 mL |
| • Measurement temperature | 50°C |
| • Chemical shift standard | chloroform: 7.24 ppm |
| • Measurement range | 20 ppm (-5 ppm to 15 ppm) |
| • Window function | exponential (BF: 0.12 Hz) |

The compositional ratio of the base resin was calculated from the integrated intensity ratio of each signal of spectra obtained from $^1$H-NMR measurement. In addition, when signals presumed to be derived from impurities were observed in a region of each signal, the contribution thereof was ignored upon calculation.

(FT-IR)

The absorbance ratio of the base resin (D1780/D698, D1720/D698) was measured as follows.

Concerning each of 10 resin particles which had been randomly selected, surface analysis was performed by an infrared spectroscopic analysis ATR measurement method, to obtain infrared absorption spectra. In this analysis, infrared absorption spectra in the range of from the sample surface to the depth of several micrometers (about 2 $\mu$m) were obtained. The absorbance ratio (D1780/D698, D1720/D698) was calculated from each infrared absorption spectrum, and the arithmetic average of the calculated absorbance ratio was used as the absorbance ratio.

Absorbances D1780, D1720, and D698 are measured by connecting "Smart-iTR" manufactured by Thermo SCIENTIFIC as an ATR accessory to a measurement apparatus available from Thermo SCIENTIFIC under a product name of "Fourier transform infrared spectrophotometer, Nicolet iS10". The infrared spectroscopic analysis ATR measurement was performed under the following conditions.

<Measuring Conditions>

- Measurement apparatus: Fourier transform infrared spectrophotometer, Nicolet iS10 (manufactured by Thermo SCIENTIFIC) and one time reflection-type horizontal ATR Smart-iTR (manufactured by Thermo SCIENTIFIC)
- ATR crystal: Diamond with ZnSe lens, angle = 42°
- Measuring method: one time ATR method
- Measurement wave number region: 4,000 cm$^{-1}$ to 650 cm$^{-1}$
- Wave number dependence of measurement depth: not corrected
- Detector: deuterated triglycine sulfate (DTGS) detector and KBr beam splitter
- Resolution: 4 cm$^{-1}$
- Integration times: 16 (the same applies at the time of background measurement)

In the ATR method, the intensity of the infrared absorption spectra obtained by the measurement varied depending on the degree of adherence between the sample and the high refractive index crystal, so that the measurement was performed by making the degree of adherence substantially uniform by applying a maximum load that could be applied by "Smart-iTR" as an ATR accessory.

For the infrared absorption spectra obtained under the above conditions, peak processing was performed as described below to obtain D1780, D1720, and D698 of each of the infrared absorption spectra.

The absorbance D1780 at 1,780 cm$^{-1}$, which was obtained from the infrared absorption spectra, corresponded to an absorption spectrum derived from antisymmetric stretching vibration due to two carbonyl groups (C=O) in maleic anhydride.

In the measurement of this absorbance, even when another absorption spectrum was overlapped at 1,780 cm$^{-1}$, peak resolution was not performed. The absorbance D1780 meant maximum absorbance between 1,810 cm$^{-1}$ and 1,745 cm$^{-1}$, with a straight line connecting 1,920 cm$^{-1}$ and 1,620 cm$^{-1}$ being a base line.

The absorbance D1720 at 1,720 cm$^{-1}$ corresponded to an absorption spectrum derived from antisymmetric stretching vibration due to a carbonyl group C=O contained in methyl methacrylate.

In the measurement of this absorbance, even when another absorption spectrum was overlapped at 1,720 cm$^{-1}$, peak resolution was not performed. The absorbance D1720 meant maximum absorbance between 1,745 cm$^{-1}$

and 1,690 cm$^{-1}$, with a straight line connecting 1,920 cm$^{-1}$ and 1,620 cm$^{-1}$ being a base line.

The absorbance D698 at 698 cm$^{-1}$ corresponded to an absorption spectrum derived from out-of-plane bending vibration of C-H in a monosubstituted benzene ring in styrene.

In the measurement of this absorbance, even when another absorption spectrum was overlapped at 698 cm$^{-1}$, peak resolution was not performed. The absorbance D698 meant maximum absorbance between 720 cm$^{-1}$ and 660 cm$^{-1}$, with a straight line connecting 1,510 cm$^{-1}$ and 810 cm$^{-1}$ being a base line.

The ratio of styrene, methyl methacrylate, and maleic anhydride (% by mass) was calculated from the absorbance ratio (D1780/D698, D1720/D698) based on the calibration curve described later. In addition, as a peak processing method, the same method as that of the resin particles described above was used.

In a method of obtaining the compositional ratio of styrene and methyl methacrylate from the absorbance ratio, a plurality of kinds of standard samples obtained by uniformly mixing a styrene resin and a methyl methacrylate resin at a predetermined compositional ratio were prepared.

Specifically, monomers obtained by weighing each of methyl methacrylate and styrene at a weight ratio of 0/100, 20/80, 40/60, 50/50, and 60/40 were placed into 10 ml screw vials, and 10 parts by weight of 2,2'-azobis (2,4-dimethylvaleronitrile) based on 100 parts by weight of the monomers was added thereto to dissolve the monomers. The resulting mixed liquid was transferred into a 2 ml sample tube ($\phi$ 7 mm $\times$ 122 mm $\times$ 190 mm), and the tube was purged with nitrogen and sealed. Then, this was placed into a water bath set at 65°C and heated for 10 hours to complete polymerization. A polymer taken out from an ampoule was used as a standard sample.

Concerning each standard sample, infrared absorption spectra were obtained by an infrared spectroscopic analysis ATR method, and thereafter, the absorbance ratio (D1780/D698) was calculated. By taking the compositional ratio (styrene resin ratio in standard sample = % by mass) in the vertical axis and taking the absorbance ratio (D1780/D698) in the transverse axis, a calibration curve was drawn. Based on this calibration curve, the compositional ratio of the styrene resin and the methyl methacrylate resin could be obtained.

As a standard sample of the styrene resin and a maleic anhydride resin, a 1/1 copolymer of styrene and maleic anhydride (product name SMA1000 (P) manufactured by CRAY VALLEY) and a 3/1 copolymer of styrene and maleic anhydride (SMA3000 (P) manufactured by CRAY VALLEY) were used.

Concerning each standard sample, infrared absorption spectra were obtained by an infrared spectroscopic analysis ATR method, and thereafter, the absorbance ratio (D1720/D698) was calculated. By taking the compositional ratio (styrene resin ratio in standard sample = % by mass) in the vertical axis and taking the absorbance ratio (D1720/D698) in the transverse axis, a calibration curve was drawn. Based on this calibration curve, the compositional ratio of the styrene resin and the maleic anhydride resin could be obtained.

From the calibration curve, the compositional ratio of styrene and methyl methacrylate, and that of styrene and maleic anhydride were obtained. From each compositional ratio, the compositional ratio of three components of styrene, methyl methacrylate, and maleic anhydride in a resin was obtained by the following procedure.

Herein, the ratio of each standard sample was set as follows.

$$\text{Methyl methacrylate} : \text{styrene} = A : B \qquad [1]$$

$$\text{Styrene} : \text{maleic anhydride} = C : D \qquad [2]$$

Since styrene was a common term, the styrene ratio C of [2] was set to the styrene ratio B of [1].

From [2],

$$\begin{aligned}
\text{styrene} \quad &: \text{maleic anhydride} \\
= C \quad &: D \\
= C \times (B/C) \quad &: D \times (B/C) \\
= B \quad &: D \times (B/C) \qquad [3].
\end{aligned}$$

From [3], the ratio of styrene was equal to [1], so that the existence ratio of methyl methacrylate, styrene, and maleic anhydride was as follows from [1] and [3].

$$\text{Methyl methacrylate} \colon \text{styrene} \colon \text{maleic anhydride}$$

$$= A \qquad\qquad \colon B \qquad \colon D \times (B/C) \qquad [4].$$

From the existence ratio of [4], the ratio of each component was as follows.

$$\text{Methyl methacrylate} = \{A/(A + B + D \times (B/C))\} \times 100$$

$$\text{Styrene} \qquad\qquad = \{B/(A + B + D \times (B/C))\} \times 100$$

$$\text{Maleic anhydride} \qquad = \{D \times (B/C)/(A + B + D \times (B/C))\} \times 100$$

(Example 1)

(Resin Particles Production Step)

100 parts by weight of a styrene-methyl methacrylate-maleic anhydride copolymer (product name "DENKA RESISFY R-200", manufactured by Denki Kagaku Kogyo K.K., styrene-derived unit: 53 parts by weight, methyl methacrylate-derived unit: 30 parts by weight, maleic anhydride-derived unit: 17 parts by weight, copolymer density: 1.16 g/cm$^3$) was fed to a twin screw extruder having a bore diameter of 30 mm, and melted and kneaded at 240°C. Subsequently, a resin composition was extruded from each nozzle of a multi-nozzle mold [in which 20 nozzles having a diameter of 1.0 mm were arranged circularly] attached to a front end of the twin screw extruder. The extruded resin was immediately cooled in a cooling water bath. A cooled strand-like resin was sufficiently drained, and thereafter, cut into small particles using a pelletizer to produce resin particles. The resulting resin particles had a particle length L of 1.3 to 1.8 mm, and a particle diameter D of 1.0 to 1.2 mm.

(Impregnation Step)

100 parts by weight of the above-mentioned resin particles were sealed in a pressure container, the interior of the pressure container was replaced with carbonic acid gas, and thereafter, the carbonic acid gas was pressed therein up to an impregnation pressure of 0.5 MPa. This was allowed to stand under an environment at 20°C. After the impregnation time of 24 hours elapsed, the interior of the pressure container was slowly depressurized over 5 minutes. In this way, the resin particles were impregnated with the carbonic acid gas to obtain expandable particles.

(Expansion Step)

Immediately after the depressurization in the above-mentioned impregnation step, the expandable particles were taken out from the pressure container, and thereafter, 0.08 parts by weight of calcium carbonate was added, followed by mixing. Thereafter, using water steam, the above-mentioned impregnation product was expanded with the water steam in an expansion tank at a high pressure, while stirring at an expansion temperature of 128°C for 120 seconds. After the expansion, the particles were taken out from the expansion tank at a high pressure, calcium carbonate was removed with an aqueous hydrogen chloride solution, and thereafter, the particles were subjected to drying in a pneumatic conveying dryer to obtain expanded particles. When the bulk density of the resulting expanded particles was measured by the above-mentioned method, the bulk density was found to be 0.12 g/cm$^3$ (bulk expansion ratio 10).

(Molding Step)

After the resulting expanded particles were allowed to stand at room temperature (23°C) for one day, they were sealed in a pressure container, the interior of the pressure container was replaced with a carbonic acid gas, and thereafter, a carbonic acid gas was pressed therein up to an impregnation pressure (gauge pressure) of 0.4 MPa. This was allowed to stand under the environment at 20°C, and pressure curing was performed for 8 hours. After the expanded particles were taken out, they were filled into a molding mold of 30 mm × 300 mm × 400 mm, heated with water steam at 0.30 MPa for 60 seconds, and then, cooled until a maximum surface pressure of an expanded molded article was reduced to 0.01 MPa, thereby, an expanded molded article was obtained.

(Example 2)

Expanded particles and an expanded molded article were obtained in the same manner as in Example 1, except that expansion was performed with stirring at an expansion temperature of 128°C for 150 seconds in the expansion step.

(Example 3)

Expanded particles and an expanded molded article were obtained in the same manner as in Example 1, except that expansion was performed with stirring at an expansion temperature of 128°C for 180 seconds in the expansion step.

(Example 4)

Expanded particles and an expanded molded article were obtained in the same manner as in Example 1, except that 0.10 parts by weight of ethylenebis(stearic acid amide) was used in place of calcium carbonate.

(Example 5)

Expanded particles and an expanded molded article were obtained in the same manner as in Example 1, except that 0.15 parts by weight of ethylenebis(stearic acid amide) was used in place of calcium carbonate.

(Comparative Example 1)

(Expansion Step)

100 parts by weight of a styrene-methyl methacrylate-maleic anhydride copolymer (product name "DENKA RESISFY R-200" manufactured by Denki Kagaku Kogyo K.K.), 1 part by weight of a resin composition containing talc, and a resin composition containing talc were fed to a tandem-type extruder in which a first extruder having a screw diameter of 50 mm and a second extruder having a screw diameter of 65 mm were connected, and melted and kneaded at 280°C.

Then, from the middle of the first single screw extruder, butane containing 35% by weight of isobutane and 65% by weight of normal butane was pressed into the resin composition in the melted state so that the amount of the butane became 1.8 parts by weight based on 100 parts by weight of the resin content, and was uniformly dispersed in the resin composition.

Thereafter, at the front end part of the second extruder, the resin composition in the melted state was cooled to 175°C, and then, the resin composition was extruded from the nozzle of a multi-nozzle mold attached to the front end of the extruder, followed by expansion. In addition, the multi-nozzle mold had a nozzle having a diameter of an outlet of 1 mm.

Then, after the resin extrusion product that had been extruded from the outlet of the nozzle of the multi-nozzle mold and expanded was cut with a rotary blade, the cut resin extrusion product was immediately cooled to produce substantially spherical expanded particles having re-expandability. The resin extrusion product included an unexpanded part immediately after extrusion from the nozzle of the multi-nozzle mold, and an expanded part in the middle of expansion connected to this unexpanded part. The resin extrusion product had been cut at an opening end of the outlet of the nozzle, and cutting of the resin extrusion product had been performed at the unexpanded part.

(Molding Step)

The resulting expanded particles were filled into a molding mold of 30 mm × 300 mm × 400 mm, heated with water steam at 0.42 MPa for 60 seconds, and then cooled until the maximum surface pressure of an expanded molded article was reduced to 0.01 MPa, so that an expanded molded article was obtained.

(Comparative Example 2)

Expanded particles and an expanded molded article were prepared in the same manner as in Example 1, except that in the middle of the first single screw extruder, butane containing 35% by weight of isobutane and 65% by weight of normal butane was pressed into the resin composition in the melted state so that the amount of the butane became 2.5 parts by weight based on 100 parts by weight of the resin content, and uniformly dispersed in the resin composition.

(Step of Producing Fiber-Reinforced Composite)

The expanded particles prepared in Examples 1 to 5 and Comparative Examples 1 to 2 as a core material were filled into a molding mold of 12 mm × 300 mm × 400 mm, heated with water steam, and then cooled until the maximum surface pressure of an expanded molded article was reduced to 0.01 MPa, so that an expanded molded article was produced. A material was cut into a planar square shape having one side of 150 mm to obtain an expanded molded article for a core material.

Separately, as a fiber-reinforced resin material (fiber-reinforced plastic), four surface materials in which a woven fabric of twill weave including carbon fibers was impregnated with a resin (manufactured by Mitsubishi Rayon Co., Ltd., product name "Pyrofil Prepreg TR3523-395GMP", weight per unit area: 200 $g/m^2$, thickness: 0.23 mm) were prepared. The surface material had a planar square shape having one side of 150 mm, and 40% by mass of an uncured epoxy resin as a thermosetting resin was contained in the surface material.

Two surface materials were superimposed so that the longitudinal directions of their warps form an angle of 90° to each other, to obtain a multilayer surface material. The resulting material was arranged on each of the front and back of an expanded molded article for a core material to obtain a laminate.

Subsequently, the above-mentioned laminate was disposed between flat molds, the flat molds in which a spacer having a thickness of 11 mm was arranged were clamped, and thus press molding was performed. The fiber-reinforced plastic was thermally adhered to an expanded article, to prepare a fiber-reinforced composite provided with a core material part and a surface layer part including a multilayer surface material.

In addition, at the time of press molding, the laminate was adjusted so as to have a temperature of 120°C and held for 8 minutes, and thus the resin contained in the fiber-reinforced plastic was cured. Then, the fibers of the fiber-reinforced plastic were bound and fixed with the cured epoxy resin, the fiber-reinforced plastic was laminated and integrated onto both surfaces of the expanded article to produce a fiber-reinforced composite.

Thereafter, after the fiber-reinforced composite was cooled to 30°C or lower, the flat molds were opened, and the fiber-reinforced composite was taken out to obtain a fiber-reinforced composite.

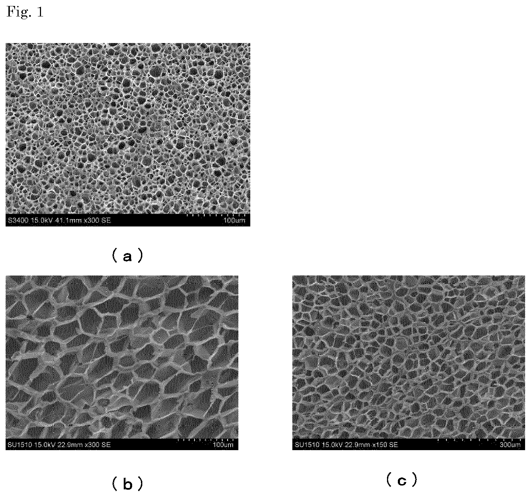

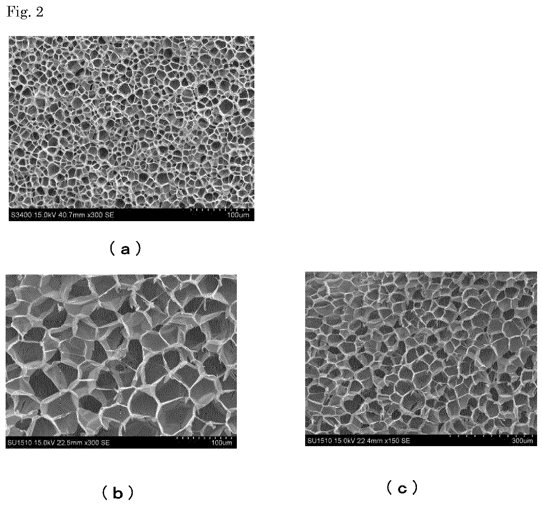

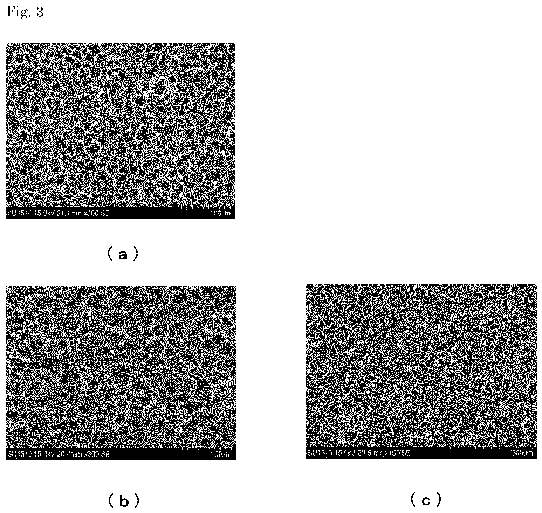

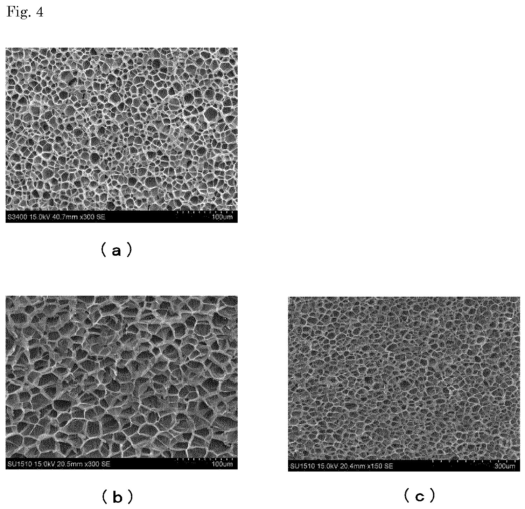

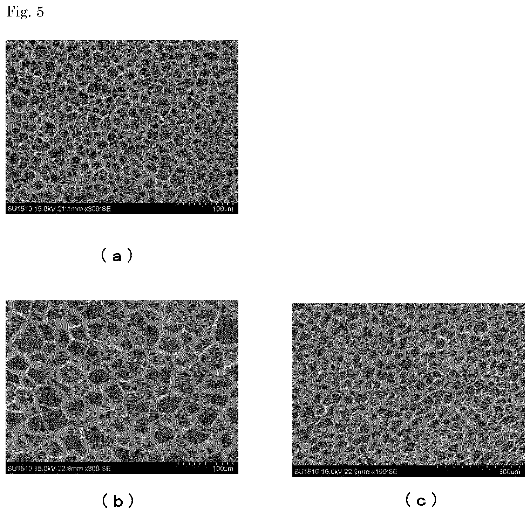

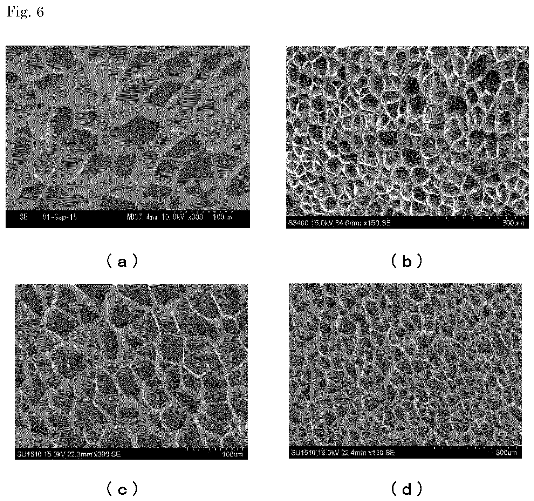

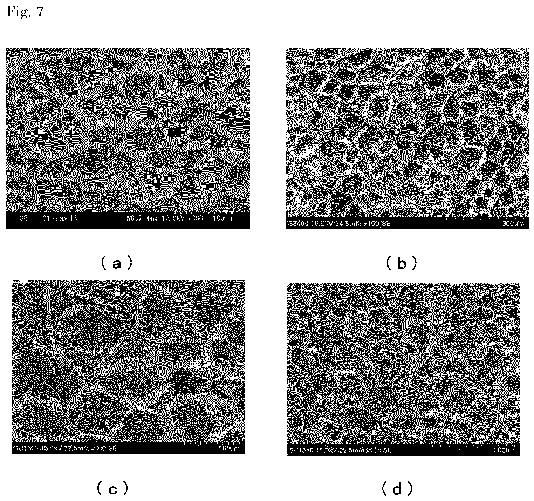

The kind of the blowing agent impregnating method, the Tg of the base resin, the bulk expansion ratio of the expanded particles, the open cell ratio of the expanded particles, the average cell diameter of the expanded particles, and the standard deviation of the average cell diameter in Examples 1 to 5 and Comparative Examples 1 to 2 mentioned above are summarized and shown in Table 1. Additionally, the expansion ratio of the expanded molded article, the average cell diameter of the expanded molded article and the standard deviation of the average cell diameter, the heating dimensional change rate, the bending elastic modulus, as well as the bending maximum point stress of the fiber-reinforced composite in Examples 1 to 5 and Comparative Examples 1 to 2 are summarized and shown in Table 2. In Figs. 1 to 5, (a) means the cross-sectional photograph at magnification 300 of the expanded particles, (b) means the cross-sectional photograph at magnification 300 of the expanded molded article, and (c) means the magnification 150 of the expanded molded article. In Figs. 6 and 7, (a) means the cross-sectional photograph at magnification 300 of the expanded particles, (b) means the cross-sectional photograph at magnification 150 of the expanded particles, (c) means the cross-sectional photograph at magnification 300 of the expanded molded article, and (d) means the magnification 150 of the expanded molded article.

[Table 1]

| | | Example | | | | | Comparative Example | |
|---|---|---|---|---|---|---|---|---|
| | | 1 | 2 | 3 | 4 | 5 | 1 | 2 |
| Blowing agent impregnating method | | Vapor phase method | | | | | Extrusion method | |
| Tg (Initiation point) (°C) | | 130 | 130 | 130 | 130 | 130 | 130 | 130 |
| Expanded particles | Bulk expansion ratio (ratio) | 10 | 15 | 20 | 10 | 15 | 10 | 20 |
| | Open cell ratio (%) | 1 | 2 | 4 | 2 | 2 | 3 | 9 |
| | Average cell diameter ($\mu$m) | 9 | 13 | 18 | 10 | 14 | 60 | 72 |
| | Standard deviation | 0.44 | 0.32 | 0.28 | 0.42 | 0.33 | 0.25 | 0.22 |

[Table 2]

| | | Example | | | | | Comparative Example | |
|---|---|---|---|---|---|---|---|---|
| | | 1 | 2 | 3 | 4 | 5 | 1 | 2 |
| Expanded molded article | Expansion ratio (ratio) | 10 | 15 | 20 | 10 | 15 | 10 | 20 |
| | Average cell diameter ($\mu$m) | 40 | 50 | 27 | 30 | 38 | 65 | 81 |
| | Standard deviation | 0.26 | 0.26 | 0.25 | 0.25 | 0.24 | 0.25 | 0.25 |
| | Heating dimensional change rate (%) | -0.97 | -0.49 | -0.54 | -0.90 | -0.66 | 6.8 | 10.5 |
| | Bending elastic modulus (MPa/ (g/cm$^3$)) | 586 | 515 | 414 | 580 | 518 | 308 | 337 |
| Composite | Bending maximum point stress (MPa) | 563 | 234 | 205 | 560 | 245 | 210 | 176 |

From Tables 1 and 2, it is understood that the expanded molded article obtained from the expanded particles having an average cell diameter in a specific range has excellent mechanical physical properties.

**Claims**

1.  Expanded particles comprising a base resin including a copolymer of an aromatic vinyl compound, a (meth)acrylic acid ester, and an unsaturated dicarboxylic acid, wherein said expanded particles have an average cell diameter of 5 to 50 $\mu$m and a standard deviation of the average cell diameter of less than 0.8.

2.  The expanded particles according to claim 1, wherein said aromatic vinyl compound is selected from a styrene-based monomer, said (meth)acrylic acid ester is selected from a (meth)acrylic acid alkyl ester (a carbon number of an alkyl group is 1 to 5), and said unsaturated dicarboxylic acid is selected from an aliphatic unsaturated dicarboxylic acid having 2 to 6 carbon atoms, and when a total of units derived from three of said aromatic vinyl compound, said (meth)acrylic acid ester, and said unsaturated dicarboxylic acid is 100 parts by weight, said copolymer comprises 30 to 80 parts by weight of the unit derived from said aromatic vinyl compound, 8 to 35 parts by weight of the unit derived from said (meth)acrylic acid ester, and 10 to 50 parts by weight of the unit derived from said unsaturated dicarboxylic acid.

3.  The expanded particles according to claim 1, wherein said aromatic vinyl compound is selected from styrene, $\alpha$-methylstyrene, vinyltoluene, ethylstyrene, i-propylstyrene, t-butylstyrene, dimethylstyrene, bromostyrene, chlorostyrene, divinylbenzene, trivinylbenzene, divinyltoluene, divinylxylene, bis(vinylphenyl)methane, bis(vinylphenyl)ethane, bis(vinylphenyl)propane, bis(vinylphenyl)butane, divinylnaphthalene, divinylanthracene, divinylbiphenyl, ethylene oxide-added di(meth)acrylate of bisphenol A, and propylene oxide-added di(meth)acrylate of bisphenol A, said (meth)acrylic acid ester is selected from methyl (meth)acrylate, ethyl (meth)acrylate, propyl (meth)acrylate, and butyl (meth)acrylate, and
    said unsaturated dicarboxylic acid is selected from maleic acid, itaconic acid, citraconic acid, aconitic acid, and an anhydride of the acids.

4.  An expanded molded article comprising a base resin including a copolymer of an aromatic vinyl compound, a (meth)acrylic acid ester, and an unsaturated dicarboxylic acid, wherein said expanded molded article has an average cell diameter of 5 to 60 $\mu$m and a standard deviation of the average cell diameter of less than 0.8.

5.  The expanded molded article according to claim 4, wherein said aromatic vinyl compound is selected from a styrene-based monomer, said (meth)acrylic acid ester is selected from a (meth)acrylic acid alkyl ester (a carbon number of an alkyl group is 1 to 5), and said unsaturated dicarboxylic acid is selected from an aliphatic unsaturated dicarboxylic acid having 2 to 6 carbon atoms, and when a total of units derived from three of said aromatic vinyl compound, said (meth)acrylic acid ester, and said unsaturated dicarboxylic acid is 100 parts by weight, said copolymer comprises 30 to 80 parts by weight of the unit derived from said aromatic vinyl compound, 8 to 35 parts by weight of the unit derived from said (meth)acrylic acid ester, and 10 to 50 parts by weight of the unit derived from said unsaturated dicarboxylic acid.

6. The expanded molded article according to claim 4, wherein said aromatic vinyl compound is selected from styrene, $\alpha$-methylstyrene, vinyltoluene, ethylstyrene, i-propylstyrene, t-butylstyrene, dimethylstyrene, bromostyrene, chlorostyrene, divinylbenzene, trivinylbenzene, divinyltoluene, divinylxylene, bis(vinylphenyl)methane, bis(vinylphenyl)ethane, bis(vinylphenyl)propane, bis(vinylphenyl)butane, divinylnaphthalene, divinylanthracene, divinylbiphenyl, ethylene oxide-added di(meth)acrylate of bisphenol A, and propylene oxide-added di(meth)acrylate of bisphenol A, said (meth)acrylic acid ester is selected from methyl (meth)acrylate, ethyl (meth)acrylate, propyl (meth)acrylate, and butyl (meth)acrylate, and
said unsaturated dicarboxylic acid is selected from maleic acid, itaconic acid, citraconic acid, aconitic acid, and an anhydride of the acids.

7. A fiber-reinforced composite having the expanded molded article according to claim 4 and a fiber-reinforced plastic layer that is laminated and integrated onto a surface of the expanded molded article.

8. The fiber-reinforced composite according to claim 7, which is used in a wind turbine, a robot arm, and an automobile component.

9. An automobile component comprising the expanded molded article according to claim 4 or the fiber-reinforced composite according to claim 7.

Fig. 1

（a）

（b）

（c）

Fig. 2

（a）

（b）

（c）

Fig. 3

（a）

（b）

（c）

Fig. 4

（a）

（b）

（c）

Fig. 5

（a）

（b）

（c）

Fig. 6

(a)

(b)

(c)

(d)

Fig. 7

（ a ）

（ b ）

（ c ）

（ d ）

## INTERNATIONAL SEARCH REPORT

International application No.

PCT/JP2017/012366

### A. CLASSIFICATION OF SUBJECT MATTER
*C08J9/18*(2006.01)i, *B32B5/28*(2006.01)i, *B32B27/30*(2006.01)i

According to International Patent Classification (IPC) or to both national classification and IPC

### B. FIELDS SEARCHED

Minimum documentation searched (classification system followed by classification symbols)
C08J9/00-42, B29C44/00-60

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2015-193723 A (Sekisui Plastics Co., Ltd.), 05 November 2015 (05.11.2015), claims; paragraphs [0006], [0029], [0030], [0060], [0061]; examples (Family: none) | 1-9 |
| Y | JP 2016-37522 A (Denka Co., Ltd.), 22 March 2016 (22.03.2016), claims; paragraphs [0004], [0011] to [0013], [0028], [0029], [0032]; examples (Family: none) | 1-6,9 |
| Y | WO 2016/140223 A1 (JSP Corp.), 09 September 2016 (09.09.2016), claims; paragraphs [0012], [0033], [0034]; examples; table 1 & JP 2016-160354 A | 1-9 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 June 2017 (06.06.17) | 20 June 2017 (20.06.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

## INTERNATIONAL SEARCH REPORT

| | International application No. |
|---|---|
| | PCT/JP2017/012366 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-159758 A  (Asahi Kasei Chemicals Corp.), 19 August 2013 (19.08.2013), claims; paragraphs [0021], [0022], [0029] to [0031], [0039], [0040]; examples; table 1 (Family: none) | 1-9 |
| A | JP 4-351646 A  (Sekisui Plastics Co., Ltd.), 07 December 1992 (07.12.1992), entire text (Family: none) | 1-9 |
| A | JP 6-322168 A  (Minnesota Mining and Manufacturing Co.), 22 November 1994 (22.11.1994), entire text & US 5670102 A          & EP 610953 A1 & CA 2115123 A | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012214751 A